# EUROPÄISCHE PATENTSCHRIFT

(11) **EP 3 416 018 B1**
(45) Veröffentlichungstag und Bekanntmachung des Hinweises auf die Patenterteilung: **19.01.2022**
(21) Anmeldenummer: 18176975.3
(22) Anmeldetag: 11.06.2018
(51) Int. Cl.: G05D 1/02, A47L 11/10

(54) **SYSTEM MIT MINDESTENS ZWEI BODENBEARBEITUNGSGERÄTEN**
SYSTEM COMPRISING AT LEAST TWO GROUND PROCESSING DEVICES
SYSTÈME POURVU D'AU MOINS DEUX APPAREILS DE TRAITEMENT DU SOL

(30) Priorität: 16.06.2017 DE 102017113287
(43) Veröffentlichungstag der Anmeldung: 19.12.2018
(73) Patentinhaber: Vorwerk & Co. Interholding GmbH, 42275 Wuppertal (DE)
(72) Erfinder: Hackert, Georg, 44869 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Koetz, Hendrik, 58300 Wetter (DE); Mosebach, Andrej, 44809 Bochum (DE); Ortmann, Roman, 47057 Duisburg (DE); Dulinski, Robin, 42283 Wuppertal (DE)
(74) Vertreter: Müller, Enno

(56) Entgegenhaltungen:
- US-A1- 2009 198 376
- US-A1- 2015 289 743
- US-A1- 2015 297 052
- US-A1- 2016 157 422

## Beschreibung

### Gebiet der Technik

Die Erfindung betrifft ein System nach Anspruch

Des Weiteren betrifft die Erfindung ein Verfahren nach Anspruch 7.

### Stand der Technik

Bodenbearbeitungsgeräte sind in einer großen Vielzahl unterschiedlicher Ausführungsformen im Stand der Technik bekannt.

Bei den Bodenbearbeitungsgeräten kann es sich bspw. um Saugreinigungsgeräte, Wischreinigungsgeräte, Poliergeräte, Schleifgeräte, und dergleichen handeln, welche geeignet sind, eine Fläche einer Umgebung zu bearbeiten. Die Bodenbearbeitungsgeräte können dabei entweder als von einem Nutzer handgeführte Geräte ausgebildet sein oder vorzugsweise auch als sich selbsttätig fortbewegende Bodenbearbeitungsgeräte im Sinne von mobilen autonomen Robotern.

Es ist bekannt, die Bodenbearbeitungsgeräte zur automatisch gesteuerten Bearbeitung einer Fläche einzusetzen, wobei das Bodenbearbeitungsgerät eine Einsatztätigkeit ausführt, bspw. eine Fläche absaugt, eine Fläche mittels einer Borstenwalze reinigt, Flüssigkeit auf eine Fläche aufbringt oder dergleichen. Des Weiteren ist es auch bekannt, mehrere Bodenbearbeitungsgeräte innerhalb eines Systems zu verwenden, wobei die Bodenbearbeitungsgeräte entweder zeitgleich oder nacheinander Einsatztätigkeiten ausführen.

Die Offenlegungsschrift US 2015/0289743 A1 offenbart ein System aus mehreren Reinigungsgeräten und einer Steuerung, wobei die Steuerung auf einen Datenspeicher zugreift, welcher für definierte Orte der Umgebung ein Staubaufkommen sowie einem oder mehreren bestimmten Reinigungsgeräten zugeordnete Reinigungsstatus enthält, die angeben, ob der Ort bereits gereinigt wurde oder nicht.

Die Offenlegungsschrift US 2009/0198376 A1 offenbart ein System mit mehreren Robotern und einer Steuereinrichtung, welche zentral eine Umgebungskarte für die Roboter erstellt. Dazu werden von den Robotern aufgenommene Daten zu der Umgebungskarte verarbeitet und den Robotern wiederum zur Verfügung gestellt.

Daneben offenbart die US 2015/0297052 A1 ein sich selbsttätig fortbewegendes Reinigungsgerät mit einem ersten Reinigungsfahrzeug, dass eine erste Reinigungseinrichtung aufweist, und mit einem zweiten Reinigungsfahrzeug, welches eine zweite Reinigungseinrichtung aufweist, wobei das zweite Reinigungsfahrzeug derart an das erste Reinigungsfahrzeug gekoppelt ist, dass das zweite Reinigungsfahrzeug dem ersten Reinigungsfahrzeug entlang eines Reinigungspfades folgt.

Weiterer gattungsbildender Stand der Technik stellt die Druckschrift US 2016/157422 A1 dar.

### Zusammenfassung der Erfindung

Obwohl sich die autonomen Bodenbearbeitungsgeräte zur Bearbeitung von Flächen bewährt haben, ist es Aufgabe der Erfindung, ein System mit mehreren Bodenbearbeitungsgeräten weiterzuentwickeln.

Zur Lösung der vorgenannten Aufgabe wird vorgeschlagen, dass der Detektionsparameter eine Eigenschaft einer Umgebung ist, nämlich eine Art der zu bearbeitenden Fläche als Hartboden oder Teppichboden und/oder ein Material der zu bearbeitenden Fläche und/oder eine Struktur der zu bearbeitenden Fläche, nämlich eines Hartbodens oder Teppichbodens, und/oder eine Leistungsaufnahme eines Elektromotors des Bodenbearbeitungsgerätes ist, und wobei der Einstellungsparameter des Bodenbearbeitungsgerätes ein Saugstrom einer Motor-Gebläse-Einheit und/oder eine Anwesenheit eines Vorsatzgerätes des Bodenbearbeitungsgerätes und/ oder eine Einstellung eines Saugmundes eines Vorsatzgerätes und/ oder eines Dichtelementes eines Vorsatzgerätes ist. Die Detektionsparameter sind somit Parameter einer Bodenfläche wie deren Art, nämlich ein Hartboden oder Teppichboden. Des Weiteren kann auch ein Material der Bodenfläche detektiert werden, bspw. Holz, Stein, Kunststoff, Wolle, Kork und andere. Des Weiteren kann auch die Detektion einer Struktur einer zu bearbeitenden Fläche vorteilhaft sein, bspw. ob es sich bei einem Teppichboden um einen kurzflorigen oder hochflorigen Teppich, einen Velourteppich oder dergleichen handelt und/ oder um einen Teppich mit einer bestimmten vorgegebenen oder angestrebten Florrichtung. Anhand der Detektionsparameter können Maßnahmen eines oder mehrerer Bodenbearbeitungsgeräte des Systems festgelegt werden, welche geeignet sind, die Eigenschaften der Umgebung zu berücksichtigten, beizubehalten oder zu verändern bzw. zu verbessern. Des Weiteren kann der Detektionsparameter ein Arbeitsstatus des Bodenbearbeitungsgerätes sein, nämlich eine freie oder blockierte Beweglichkeit des Bodenbearbeitungsgerätes und/ oder eine Leistungsaufnahme eines Elektromotors des Bodenbearbeitungsgerätes. Es kann somit für aktuelle Einstellungen des Bodenbearbeitungsgerätes detektiert werden, welches Verhalten das Bodenbearbeitungsgerät während des Arbeitsbetriebs zeigt. Daraus können Maßnahmen abgeleitet werden, die bspw. mit bestimmten Einstellungen des Bodenbearbeitungsgerätes einen ungewünschten Arbeitsstatus vermeiden. Bei dem ungewünschten Arbeitsstatus kann es sich bspw. um ein innerhalb der Umgebung festgefahrenes Bodenbearbeitungsgerät, ein blockiertes Bodenbearbeitungselement, wie z. B. eine rotierbare Reinigungswalze handeln. Des Weiteren kann auch die Leistungsaufnahme eines Elektromotors gemessen werden, welcher bspw. Antriebsräder des Bodenbearbeitungsgerätes oder ein Bodenbearbeitungselement antreibt. Anhand der Leistungsaufnahme des Elektromotors kann erkannt werden, ob die jeweilige angetriebene Komponente einem übermäßigen Widerstand ausgesetzt ist, bspw. aufgrund einer blockierten Bewegung. Des Weiteren wird vorgeschlagen, dass der Einstellungsparameter ein Parameter eines Arbeitselementes und/oder eines Arbeitsbetriebs des Bodenbearbeitungsgerätes ist. Insbesondere kann der Einstellungsparameter bspw. eine Stellung und/ oder eine Drehzahl und/ oder eine Geschwindigkeit eines Arbeitselementes sein, ein Saugstrom einer Motor-Gebläse-Einheit, eine Fortbewegungsgeschwindigkeit und/ oder Fortbewegungsrichtung und/oder Arbeitsrichtung des Bodenbearbeitungsgerätes, eine Anwesenheit und/oder Einstellung eines Vorsatzgerätes des Bodenbearbeitungsgerätes, nämlich eines Saugmundes und/ oder eines Dichtelementes. Der von der Recheneinrichtung berechnete Einstellungsparameter ist dabei ein Parameter, welcher zu einer vorteilhaften Einstellung der Elemente, Komponenten und/ oder Betriebsweise eines Bodenbearbeitungsgeräte in der Art führt, dass ein Arbeitsbetrieb vollständig und erfolgreich durchgeführt werden kann und dass wiederum Detektionsparameter, welche das Bodenbearbeitungsgerät während des mit diesen Einstellungsparametern durchgeführten Arbeitsbetriebs aufnimmt, einem Referenzparametern vorzugsweise ähneln oder entsprechen, d.h. eine freie Beweglichkeit des Bodenbearbeitungsgerätes ermöglichen, eine Leistungsaufnahme eines Elektromotors vorzugsweise reduzieren, eine Schmutzaufnahme des Bodenbearbeitungsgerätes möglichst erhöhen und dergleichen. Somit werden Einstellungsparameter zur Verfügung gestellt, die bspw. ein Festfahren des Bodenbearbeitungsgerätes auf einem z. B. hochflorigen Teppichboden vermeiden, eine Arbeitsrichtung in Florrichtung vorgeben, eine Bürstendrehzahl und/ oder Drehrichtung, einen Saugstrom, eine Fahrgeschwindigkeit, eine Stellung eines Saugmundes und/oder des Gehäuses des Bodenbearbeitungsgerätes so anpassen, dass keine Fehlfunktion des Bodenbearbeitungsgerätes auftritt, sondern der Arbeitsbetrieb vielmehr optimal durchgeführt werden kann. Gegebenenfalls kann auch der Austausch eines Vorsatzgerätes, bspw. eine Saugdüse, für ein Reinigungsgerät empfohlen werden oder eine Modifikation des Vorsatzgerätes, bspw. eine Applikation einer bestimmten Bürstenwalze, eine Einstellung eines Dichtelementes wie bspw. einer flexiblen Dichtleiste oder eines Borstenelementes oder dergleichen.

Das System ist nun ausgebildet, eine gemeinsame Datenbank bereitzustellen, welche Detektionsparameter enthält, die von Detektionseinrichtungen mindestens zwei verschiedener Bodenbearbeitungsgeräte aufgenommen wurden. Die Detektionsparameter der unterschiedlichen Bodenbearbeitungsgeräte werden so innerhalb der gemeinsamen Datenbank vorgehalten, dass jedes Bodenbearbeitungsgerät auf Detektionsparameter anderer Bodenbearbeitungsgeräte zugreifen kann. Insbesondere kann jedes Bodenbearbeitungsgerät auf alle in der Datenbank gespeicherten Detektionsparameter zugreifen. Die Bodenbearbeitungsgeräte sind somit über die Datenbank derart innerhalb des Systems vernetzt, dass von Detektionseinrichtungen verschiedener Bodenbearbeitungsgeräte aufgenommene Detektionsparameter innerhalb der gemeinsamen Datenbank gespeichert sind und somit auch den anderen Bodenbearbeitungsgeräten für einen Arbeitsbetrieb zur Verfügung stehen. Auf der Basis der gesammelten Detektionsparameter können die Bodenbearbeitungsgeräte für ihren eigenen Arbeitsbetrieb Verbesserungen ableiten, insbesondere wenn die verwendeten bzw. zu verwendenden Einstellungsparameter der Bodenbearbeitungsgeräte identisch oder zumindest ähnlich sind. Insbesondere kann durch einen Vergleich auch verschiedener Fähigkeiten unterschiedlicher Bodenbearbeitungsgeräte und der gesammelten Detektionsparameter in Verbindung mit anstehenden Bodenbearbeitungsaufgaben eine gezielte Einsatzplanung mehrerer Bodenbearbeitungsgeräte nach deren Eignung durchgeführt werden.

Es wird vorgeschlagen, dass die Datenbank in einem lokalen Speicher eines Bodenbearbeitungsgerätes und/oder in einer separat zu dem Bodenbearbeitungsgerät ausgebildeten externen Speichereinrichtung gespeichert ist, insbesondere auf einem Webserver oder in einem mobilen Kommunikationsgerät. Die externe Speichereinrichtung kann insbesondere eine Cloud oder auch ein Speicher eines mobilen Kommunikationsgerätes wie bspw. eines Mobiltelefons, Tablet-Computers, Laptops oder auch eines stationären Servers, insbesondere eines Servers eines Hausautomationssystems, sein. Die gemeinsame Datenbank des Systems kann somit grundsätzlich entweder in jedem der Bodenbearbeitungsgeräte oder auch in einer separaten Einrichtung des Systems ausgebildet sein. Sofern die Datenbank in einem lokalen Speicher eines Bodenbearbeitungsgerätes gespeichert ist, greifen dennoch auch die in dem System vorhandenen anderen Bodenbearbeitungsgeräte auf diese gemeinsame Datenbank zu. Die Kommunikation zwischen den Bodenbearbeitungsgeräten und dem lokalen Speicher des Bodenbearbeitungsgerätes bzw. der externen Speichereinrichtung erfolgt vorzugsweise drahtlos, insbesondere mittels einer Funktechnologie wie WLAN, Bluetooth oder ZigBee. Darüber hinaus kann grundsätzlich auch eine drahtgebundene Kommunikation verwendet werden, bspw., wenn die Speichereinrichtung in einer Basisstation ausgebildet ist, an welcher ein Bodenbearbeitungsgerät andocken kann. Die Basisstation dient vorzugsweise nicht nur der Speicherung der Datenbank, sondern zusätzlich auch der Ausführung einer oder mehrerer Servicetätigkeiten für ein Bodenbearbeitungsgerät, bspw. dem Aufladen eines Akkumulators des Bodenbearbeitungsgerätes, dem Entleeren eines Sauggutsammelbehälters oder dergleichen. Das System kann des Weiteren bspw. einen in einem Haushalt oder im Internet befindlichen Server, einen externen Rechner bzw. eine externe Steuereinheit oder ein als solches ausgestattetes Smartphone und/ oder einen Tablet-Computer mit einer entsprechenden Applikation aufweisen und drahtlos, oder bei rein hausinternen Systemkomponenten auch drahtgebunden, mit den die Bodenbearbeitungseinrichtungen aufweisenden Bodenbearbeitungsgeräten und/oder Basisstationen verbunden sein.

Das System weist des Weiteren vorzugsweise eine Recheneinrichtung auf, welche entweder eine Recheneinrichtung des Bodenbearbeitungsgerätes und/ oder eine der Datenbank zugeordnete Recheneinrichtung ist. Somit kann die Recheneinrichtung entweder in ein Bodenbearbeitungsgerät integriert sein oder wie auch die Datenbank in einer externen Einrichtung vorgesehen sein, bspw. in einer Cloud, auf einem lokalen Server eines Haushalts, in einem externen Kommunikationsgerät wie bspw. einem Mobiltelefon oder dergleichen. Die Recheneinrichtung steht in Kommunikationsverbindung mit der Datenbank.

Es wird vorgeschlagen, dass die Recheneinrichtung eingerichtet ist, von der Detektionseinrichtung aufgenommene Detektionsparameter zu verarbeiten und an die Datenbank zu übermitteln und/ oder auf in der Datenbank gespeicherte Detektionsparameter zuzugreifen und in Abhängigkeit von mindestens einem Detektionsparameter einen Einstellungsparameter eines Bodenbearbeitungsgerätes zu berechnen. Gemäß einer ersten Ausführungsform kann die Recheneinrichtung die Detektionsparameter bspw. unmittelbar von der jeweiligen Detektionseinrichtung empfangen und zumindest teilweise auswerten, wobei die sodann verarbeiteten Detektionsparameter an die Datenbank übermittelt werden und dort auch anderen Bodenbearbeitungsgeräten zur Verfügung gestellt werden. Des Weiteren können die Detektionsparameter der Detektionseinrichtung jedoch auch als Rohdaten in der Datenbank hinterlegt werden, woraufhin dann vorzugsweise eine Recheneinrichtung, welche der Datenbank zugeordnet ist, auf die in der Datenbank gespeicherten Detektionsparameter zugreift und einen Einstellungsparameter für ein Bodenbearbeitungsgerät berechnet. Die Detektionsparameter, auf welche die zentrale Recheneinrichtung zugreift, können entweder Rohdaten oder auch zumindest teil ausgewertete Detektionsparameter sein, welche dann von der zentralen Recheneinrichtung weiter verarbeitet werden, um einen Einstellungsparameter für ein Bodenbearbeitungsgerät zu generieren. Die Verarbeitung der Detektionsparameter mittels der lokalen oder auch zentralen externen Recheneinrichtung kann einen Vergleich aufgenommener Detektionsparameter eines ersten Bodenbearbeitungsgerätes mit aufgenommenen Detektionsparametern eines oder mehrerer anderer Bodenbearbeitungsgeräte beinhalten und/oder einen Vergleich mit Referenzparametern, welche bspw. einen Durchschnittswert der in einem Arbeitsbetrieb von den Bodenbearbeitungsgeräten erfolgreich verwendeten Detektionsparameter betreffen, wobei nur solche Detektionsparameter als Referenzparameter herangezogen werden, welche einen Arbeitsbetrieb erfolgreich durchführen und abschließen konnten. Der Einstellungsparameter des Bodenbearbeitungsgerätes ist somit ein solcher Einstellungsparameter, welcher gemäß einer Historie des Systems bei diesem oder auch anderen Bodenbearbeitungsgeräten zu einem Bodenbearbeitungserfolg geführt hat.

Insbesondere wird vorgeschlagen, dass der Detektionsparameter ein Detektionsparameter eines ersten Bodenbearbeitungsgerätes ist und dass der Einstellungsparameter ein Einstellungsparameter eines zweiten Bodenbearbeitungsgerätes ist. Somit ist die Recheneinrichtung eingerichtet, einen in der Datenbank gespeicherten Detektionsparameter eines ersten Bodenbearbeitungsgerätes zu verwenden, um einen Einstellungsparameter für ein anderes, zweites Bodenbearbeitungsgerät zu berechnen. In diesem Sinne erfolgt ein Austausch bzw. eine Nutzung von Detektionsparametern durch Bodenbearbeitungsgeräte, deren Detektionseinrichtung den entsprechenden Detektionsparameter nicht selbst aufgenommen haben. Dies ermöglicht eine optimale Zusammenarbeit und Unterstützung der in dem System vernetzten Bodenbearbeitungsgeräte mit Hilfe der gemeinsamen Datenbank, in welche eine Vielzahl von Detektionsparametern unterschiedlicher Bodenbearbeitungsgeräte eingepflegt werden.

Des Weiteren wird vorgeschlagen, dass das System eine auf die Datenbank zugreifende Steuereinrichtung aufweist, welche eingerichtet ist, das Bodenbearbeitungsgerät unter Verwendung eines Einstellungsparameters zu steuern. Die Steuereinrichtung kann entweder eine lokale Steuereinrichtung des Bodenbearbeitungsgerätes sein oder auch eine zentrale, allen Bodenbearbeitungsgeräten gemeinsame Steuereinrichtung, welche die Funktion des Bodenbearbeitungsgerätes bzw. die Einstellung der Einstellungsparameter von extern steuert. In dem letztgenannten Fall kann die Einsatzplanung für das Bodenbearbeitungsgerät von einer zentralen Steuereinrichtung vorgenommen werden, die zentral eine gezielte Einsatzplanung eines oder mehrerer Bodenbearbeitungsgeräte nach deren Betriebseignung vorgeben kann. Die Steuereinrichtung kann eine eigene Steuereinrichtung des gesteuerten Bodenbearbeitungsgerätes oder auch eine Steuereinrichtung einer externen Einrichtung, wie bspw. eines externen PC, eines mobilen Kommunikationsgerätes, eines Webservers oder dergleichen, sein.

Neben dem zuvor beschriebenen System wird mit der Erfindung des Weiteren auch ein Verfahren zum Betrieb eines Systems mit mindestens zwei Bodenbearbeitungsgeräten zur automatisch gesteuerten Bearbeitung einer Fläche eines Innenraumes anhand von definierten Einstellungsparametern des jeweiligen Bo-denbearbeitungsgerätes vorgeschlagen, wobei jedes der Bodenbearbeitungsgeräte mindestens ein Arbeitselement, nämlich ein von einem Elektromotor angetriebenes Bodenbearbeitungselement, und mindestens eine Detektionseinrichtung aufweist, die mindestens einen Detektionsparameter des Bodenbearbeitungsgerätes und/ oder einer Umgebung des Bodenbearbeitungsgerätes detektiert, wobei Detektionsparameter von zumindest zwei Bodenbearbeitungsgeräten den Einstellungsparametern des jeweiligen Bodenbearbeitungsgerätes zugehörig in einer den Bodenbearbeitungsgeräten gemeinsam zugeordneten Datenbank gespeichert werden, wobei der Detektionsparameter eine Eigenschaft einer Umgebung, nämlich eine Art der zu bearbeitenden Fläche als Hartboden oder Teppichboden und/ oder ein Material der zu bearbeitenden Fläche und/ oder eine Struktur der zu bearbeitenden Fläche, nämlich eines Hartbodens oder Teppichbodens, und/oder eine Leistungsaufnahme eines Elektromotors des Bodenbearbeitungsgerätes ist, und wobei der Einstellungsparameter des Bodenbearbeitungsgerätes ein Saugstrom einer Motor-Gebläse-Einheit und/oder eine Anwesenheit eines Vorsatzgerätes des Bodenbearbeitungsgerätes und/oder eine Einstellung eines Saugmundes eines Vorsatzgerätes und/oder eines Dichtelementes eines Vorsatzgerätes ist. Insbesondere kann vorgesehen sein, dass ein Einstellungsparameter eines Bodenbearbeitungsgerätes in Abhängigkeit von zumindest einem in der Datenbank gespeicherten Detektionsparameter berechnet wird.

Das vorgeschlagene Verfahren eignet sich insbesondere zum Betrieb eines zuvor detailliert beschriebenen Systems aus mehreren Bodenbearbeitungsgeräten. Die zuvor in Bezug auf das System beschriebenen Merkmale und Vorteile gelten somit auch entsprechend für das Verfahren.

Das Verfahren beinhaltet, dass eine Detektionseinrichtung eines Bodenbearbeitungsgerätes als Detektionsparameter eine Eigenschaft einer Umgebung detektiert, nämlich eine Art und/ oder ein Material und/ oder eine Struktur einer zu bearbeitenden Fläche. Darüber hinaus kann als Detektionsparameter auch ein Arbeitsstatus des Bodenbearbeitungsgerätes detektiert werden, nämlich eine freie oder blockierte Beweglichkeit des Bodenbearbeitungsgerätes und/ oder eine Leistungsaufnahme eines Elektromotors des Bodenbearbeitungsgerätes. Die detektierten Detektionsparamater werden in der den Bodenbearbeitungsgeräten gemeinsam zugeordneten Datenbank gespeichert, welche Datenbank in einem lokalen Speicher eines Bodenbearbeitungsgerätes und/ oder in einer separat zu dem Bodenbearbeitungsgerät ausgebildeten externen Speichereinrichtung gespeichert ist, insbesondere auf einem Webserver oder auf einem mobilen Kommunikationsgerät. Eine Recheneinrichtung des Bodenbearbeitungsgerätes und/ oder eine der Datenbank zugeordnete Recheneinrichtung kann die Detektionsparameter auswerten und weiterverarbeiten. Insbesondere kann vorgesehen sein, dass die Recheneinrichtung von der Detektionseinrichtung aufgenommene Detektionsparameter verarbeitet und an die Datenbank übermittelt und/ oder auf in der Datenbank gespeicherte Detektionsparameter zugreift und in Abhängigkeit von mindestens einem Detektionsparameter einen Einstellungsparameter eines Bodenbearbeitungsgerätes berechnet. Vorteilhaft verarbeitet die Recheneinrichtung einen oder mehrere Detektionsparameter eines ersten Bodenbearbeitungsgerätes und berechnet daraus einen oder mehrere Einstellungsparameter eines zweiten Bodenbearbeitungsgerätes. Dadurch erfolgt eine vorzugsweise Zusammenarbeit zwischen mehreren Bodenbearbeitungsgeräten des Systems, sodass ein Bodenbearbeitungsgerät vorteilhaft in Abhängigkeit von Detektionsparametern eingestellt werden kann, die von einer Detektionseinrichtung eines oder mehrerer anderer Bodenbearbeitungsgeräte aufgenommen wurden. Somit ist es nicht notwendig, dass jedes Bodenbearbeitungsgerät des Systems alle Detektionsparameter selbst aufnimmt. Vielmehr können die Bodenbearbeitungsgeräte auch von den Informationen anderer Bodenbearbeitungsgeräte profitieren. Insbesondere können auch Arbeitsparameter, d.h. Einstellungsparameter eines Bodenbearbeitungsgerätes, durch ergänzende Simulation oder Experimentieren eines Bodenbearbeitungsvorganges ermittelt werden. Die von einer Vielzahl von Bodenbearbeitungsgeräten erfassten und in der gemeinsamen Datenbank bereitgestellten Detektionsparameter werden den einzelnen Bodenbearbeitungsgeräten zur Verfügung gestellt, wobei Einstellungsparameter der Bodenbearbeitungsgeräte in Abhängigkeit von neu aufgenommenen Detektionsparametern überschrieben werden können. Auf der Basis der großen Vielzahl von Detektionsparametern kann eine Einsatzplanung für eines oder mehrere Bodenbearbeitungsgeräte von einer zentralen Steuereinrichtung oder auch einer lokalen Steuereinrichtung eines Bodenbearbeitungsgerätes vorgenommen werden, wobei ein Abgleich der einzelnen bekannten Einstellungsparameter der Bodenbearbeitungsgeräte und der detektierten Detektionsparameter mit den anstehenden Reinigungsaufgaben eines oder mehrerer Bodenbearbeitungsgeräte erfolgt, wobei auch eine gezielte Einsatzplanung in Abhängigkeit von einer individuellen Eignung eines Bodenbearbeitungsgerätes vorgegeben werden kann. In Abhängigkeit von den verarbeiteten Detektionsparametern kann als ein Einstellungsparameter bspw. ein Parameter eines Arbeitselementes und/oder eines Arbeitsbetriebs des Bodenbearbeitungsgerätes berechnet werden. Insbesondere kann eine Stellung und/oder Drehzahl und/oder Geschwindigkeit eines Arbeitselementes vorgegeben werden, ein Saugstrom einer Motor-Gebläse-Einheit, eine Fortbewegungsgeschwindigkeit und/ oder Fortbewegungsrichtung und/ oder Arbeitsrichtung des Bodenbearbeitungsgerätes, eine Anwesenheit und/oder Einstellung eines Vorsatzgerätes des Bodenbearbeitungsgerätes, insbesondere eines Saugmundes und/oder Dichtelementes. In Abhängigkeit von den eingestellten Einstellungsparametern steuert anschließend eine lokale Steuereinrichtung des Bodenbearbeitungsgerätes oder auch eine mehreren Bodenbearbeitungsgeräten gemeinsam zugeordnete Steuereinrichtung das betreffende Bodenbearbeitungsgerät unter Verwendung eines oder mehrerer Einstellungsparameter.

### Kurze Beschreibung der Zeichnungen

Im Folgenden wird die Erfindung anhand von Ausführungsbeispielen näher erläutert. Es zeigen:
- Fig. 1: ein System mit zwei Bodenbearbeitungsgeräten und einer den Bodenbearbeitungsgeräten gemeinsam zugeordneten Datenbank;
- Fig. 2: eine beispielhafte Datenbank für drei Bodenbearbeitungsgeräte.

### Beschreibung der Ausführungsformen

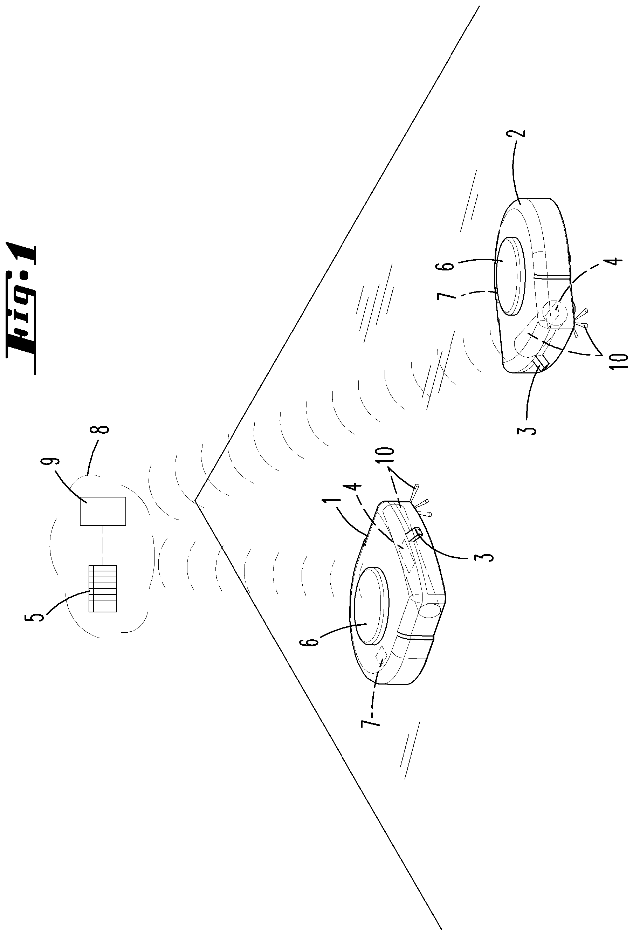

Figur 1 zeigt eine Umgebung, bspw. einen Teilbereich eines Raumes einer Wohnung. In dem Raum können Hindernisse (nicht dargestellt) angeordnet sein, bspw. Möbelstücke, Wände und dergleichen. In der Umgebung befindet sich wie dargestellt ein System aus zwei Bodenbearbeitungsgeräten 1, 2 welche hier als sich selbsttätig fortbewegende Bodenbearbeitungsgeräte 1, 2, nämlich Reinigungsroboter, ausgebildet sind. Neben den Bodenbearbeitungsgeräten 1, 2 weist das System eine den Bodenbearbeitungsgeräten 1, 2 gemeinsam zugeordnete Datenbank 5 auf. Die Datenbank 5 ist in einer externen Speichereinrichtung 8 gespeichert, zu welcher beide Bodenbearbeitungsgeräte 1, 2 eine Datenkommunikationsverbindung, hier bspw. eine WLAN-Verbindung, aufweisen. Die externe Speichereinrichtung 8 weist des Weiteren eine Recheneinrichtung 9 auf, welche auf die Datenbank 5 zugreifen kann und darin enthaltene Daten auswählen, verarbeiten, überschreiben oder auch löschen kann. Die externe Speichereinrichtung 8 ist hier bspw. ein Webserver (Cloud). Neben den dargestellten zwei Bodenbearbeitungsgeräten 1, 2 können weitere Bodenbearbeitungsgeräte in das System eingebunden sein und ebenfalls auf die gemeinsame Datenbank 5 innerhalb der externen Speichereinrichtung 8 zugreifen.

Obwohl dies in der Figur nicht dargestellt ist, könnte die Speichereinrichtung 8 auch ein in der Wohnung angeordneter lokaler Server sein, bspw. ein Teil einer Basisstation, welche zur Ausführung einer oder mehrerer Servicetätigkeiten für eines oder mehrere Bodenbearbeitungsgeräte 1, 2 ausgebildet ist. Mit einer solchen Basisstation könnte sich das Bodenbearbeitungsgerät 1, 2 verbinden, um bspw. einen Akkumulator aufzuladen oder einen Sauggutsammelbehälter zu leeren.

Die Bodenbearbeitungsgeräte 1, 2 weisen hier jeweils einen lokalen Speicher 7 auf, welcher in das jeweilige Bodenbearbeitungsgerät 1, 2 integriert ist. In dem lokalen Speicher 7 kann bspw. eine Umgebungskarte der Umgebung gespeichert werden, anhand welcher sich ein Navigations- und Selbstlokalisierungssystem des Bodenbearbeitungsgerätes 1, 2 orientieren kann, um selbsttätig und ohne Kollision mit in der Umgebung befindlichen Hindernissen zu verfahren. Des Weiteren könnte auch ein lokaler Speicher 7, eines der Bodenbearbeitungsgeräte 1, 2 als gemeinsame Speichereinrichtung 8 des Systems dienen und dementsprechend die den Bodenbearbeitungsgeräten 1, 2 gemeinsam zugeordnete Datenbank 5 enthalten. Bei dieser Ausführung ist die Datenbank 5 zwar lokal in eines der Bodenbearbeitungsgeräte 1, 2 integriert, jedoch greifen alle Bodenbearbeitungsgeräte 1, 2 des Systems auf diese Datenbank 5 zu, um Daten gemeinsam zu nutzen und auch anderen Bodenbearbeitungsgeräten 1, 2 zur Verfügung zu stellen.

Die Bodenbearbeitungsgeräte 1, 2 sind hier bspw. als Saugroboter ausgebildete Bodenbearbeitungsgeräte 1, 2. Des Weiteren können die Bodenbearbeitungsgeräte 1, 2 auch unterschiedliche Geräte sein, bspw. Wischgeräte, Schleifgeräte, Poliergeräte und weitere. Darüber hinaus ist es auch möglich, dass eines oder mehrere der Bodenbearbeitungsgeräte 1, 2 des Systems nicht selbsttätig verfahrbar ausgebildet sind, sondern von einem Nutzer manuell über eine zu bearbeitende Fläche geführt werden. Die Bodenbearbeitungsgeräte 1, 2 verfügen hier über motorisch angetriebene Räder, mit deren Hilfe sich das jeweilige Bodenbearbeitungsgeräte 1, 2 innerhalb der Umgebung fortbewegen kann. Des Weiteren weisen die Bodenbearbeitungsgeräte 1, 2 Arbeitselemente 10 auf, hier bspw. eine um eine im Wesentlichen horizontale Achse rotierende Borstenwalze, die auf eine zu reinigende Fläche einwirkt. Weiter weisen die Bodenbearbeitungsgeräte 1, 2 eine nicht weiter dargestellte Saugmundöffnung auf, über welche mittels einer Motor-Gebläse-Einheit mit Sauggut beaufschlagte Luft in das Bodenbearbeitungsgerät 1, 2 eingesaugt werden kann. Für die Elektroversorgung der Elektrokomponenten der Bodenbearbeitungsgeräte 1, 2, wie für den Antrieb der Räder, der Arbeitselemente 10 und des Weiteren vorgesehene Elektronik, weisen die Bodenbearbeitungsgeräte 1, 2 jeweils einen nicht dargestellten, wiederaufladbaren Akkumulator auf.

Die Bodenbearbeitungsgeräte 1, 2 sind des Weiteren mit einer Abstandsmesseinrichtung 6 ausgestattet, welche hier bspw. eine Triangulationsmesseinrichtung aufweist. Die Abstandsmesseinrichtung 6 misst Abstände zu Hindernissen und Wänden innerhalb der Umgebung. Die Abstandsmesseinrichtung 6 weist im Einzelnen bspw. eine Laserdiode auf, deren emittierter Lichtstrahl über eine Umlenkeinrichtung aus einem Gehäuse des Bodenbearbeitungsgerätes 1, 2 herausgeführt und um eine in der gezeigten Orientierung des Bodenbearbeitungsgerätes 1, 2 senkrecht stehende Drehachse rotierbar ist, insbesondere innerhalb eines Winkelbereiches von 360 Grad. Dadurch ist eine Rundum-Abstandsmessung um das Bodenbearbeitungsgerät 1, 2 möglich. Mit Hilfe der Abstandsmesseinrichtung 6 kann die Umgebung in einer bevorzugt horizontalen Ebene vermessen werden, d.h. in einer zu der zu reinigenden Fläche parallelen Ebene. Dadurch kann das Bodenbearbeitungsgerät 1, 2 unter Vermeidung einer Kollision mit den Hindernissen bzw. Wänden in der Umgebung verfahren. Die mittels der Abstandsmesseinrichtung 6 aufgenommenen Umgebungsdaten werden zur Erstellung einer Umgebungskarte der Umgebung genutzt. Des Weiteren kann das Bodenbearbeitungsgerät 1, 2 bspw. einen nicht dargestellten Odometrie-Sensor aufweisen, welcher eine von dem jeweiligen Bodenbearbeitungsgerät 1, 2 zurückgelegte Wegstrecke misst. Des Weiteren ist es auch möglich, dass ein Bodenbearbeitungsgerät 1, 2 bspw. einen Kontaktsensor oder dergleichen aufweist.

Die Bodenbearbeitungsgeräte 1, 2 weisen des Weiteren ein Kommunikationsmodul (nicht dargestellt) auf, insbesondere ein Funkmodul wie bspw. ein WLAN-Modul, um sich mit der gemeinsamen Speichereinrichtung 8 zu verbinden.

Des Weiteren weist jedes der Bodenbearbeitungsgeräte 1, 2 mehrere Detektionseinrichtungen 3, 4 auf. Eine Detektionseinrichtung 3 ist hier zur Erfassung einer Bodenart der zu reinigenden Fläche ausgebildet. Die Detektionseinrichtung 3 ist bspw. eine Bilderfassungseinrichtung, hier eine Kamera. Mittels der Detektionseinrichtung 3 wird ein Bild der zu reinigenden Fläche aufgenommen und zur Erkennung einer Bodenart mit Referenzdaten verglichen, welche stellvertretend für bspw. Teppichboden, Holzboden, Fliesen, Steinboden und dergleichen sind. Des Weiteren kann die Detektionseinrichtung 3 zusätzlich auch ausgebildet sein, neben der Bodenart eine Verschmutzungsart und/oder einen Verschmutzungsgrad der zu reinigenden Fläche zu detektieren. Eine weitere Detektionseinrichtung 4 ist bspw. ein optischer Sensor, welcher eine Stellung eines Arbeitselementes 10, hier der Borstenwalze, relativ zu der zu reinigenden Fläche erkennt. Unterschiedliche Stellungen des Arbeitselementes 10 können bspw. eine von der zu reinigenden Fläche abgehobene Stellung und eine auf die zu reinigende Fläche aufgesetzte Stellung des Arbeitselementes 10 sein. Bei der Reinigung eines hochflorigen Teppichbodens ist das Arbeitselement 10 bspw. von der zu reinigenden Fläche abgehoben. Im Falle eines kurzflorigen Teppichbodens ist Arbeitselement 10 hingegen bspw. auf die zu reinigende Fläche aufgesetzt.

Die Erfindung funktioniert nun so, dass die Bodenbearbeitungsgeräte 1, 2 innerhalb der Umgebung umherfahren und dabei eine Reinigungstätigkeit ausführen, indem diese einerseits mittels der Motor-Gebläse-Einheit Luft in das Bodenbearbeitungsgerät 1, 2 einsaugen und andererseits mittels des Arbeitselementes 10 Schmutz von der zu reinigenden Fläche aufnehmen. Dabei arbeiten die Bodenbearbeitungsgeräte 1, 2 nach voreingestellten Einstellungsparametern 12, welche Einstellungen der einzelnen Komponenten des jeweiligen Bodenbearbeitungsgerätes 1, 2 sind. Hier handelt es sich bei den Einstellungsparametern bspw. um eine Stellung des Arbeitselementes 10, eine Fortbewegungsgeschwindigkeit des Bodenbearbeitungsgerätes 1, 2 und einen definierten Saugstrom der Motor-Gebläse-Einheit des Bodenbearbeitungsgerätes 1, 2. Die aktuellen Einstellungsparameter 12 des jeweiligen Bodenbearbeitungsgerätes 1, 2 werden an die innerhalb der externen Speicheinrichtung 8 gespeicherte Datenbank 5 übermittelt und darin dem jeweiligen Bodenbearbeitungsgerät 1, 2 zugeordnet.

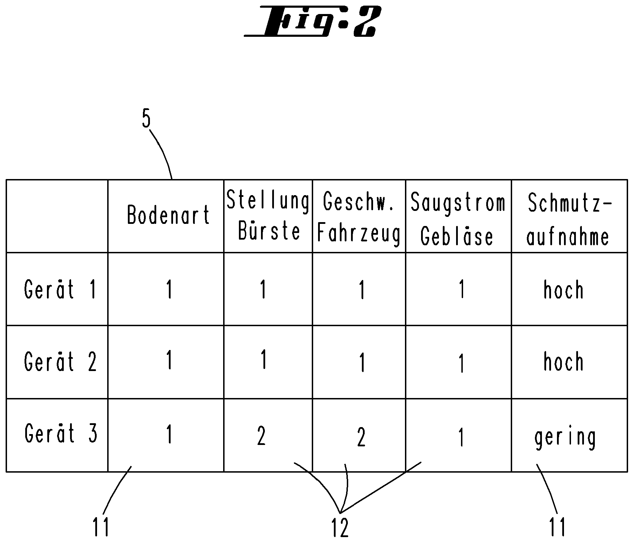

Figur 2 zeigt einen Teil einer beispielhaften Datenbank 5, in welcher zu jedem Bodenbearbeitungsgerät 1, 2 Einstellungsparameter 12 und Detektionsparameter 11 gespeichert sind. Die Einstellungsparameter 12 und die Detektionsparameter 11 sind hier stellvertretend für reelle Werte dimensionslos als unterschiedliche Werte "1" und "2" angegeben. Die Einstellungsparameter 12 der Bodenbearbeitungsgeräte 1, 2 repräsentieren hier die Stellung des Arbeitselementes 10 (Stellung Bürste), die Fortbewegungsgeschwindigkeit des Bodenbearbeitungsgerätes 1, 2 (Geschwindigkeit Fahrzeug) und den von der Motor-Gebläse-Einheit zu erzeugenden Nenn-Saugstrom (Saugstrom/Gebläse). Des Weiteren enthält die Datenbank 5 - den Einstellungsparametern 12 zugeordnet - von den Detektionseinrichtungen 3, 4 der Bodenbearbeitungsgeräte 1, 2 aufgenommene Detektionsparameter 11, hier bspw. eine von der Detektionseinrichtung 3 detektierte Bodenart der zu reinigenden Fläche und eine von der Detektionseinrichtung 4 detektierte Schmutzaufnahme, welche eine in dem Saugluftstrom befindliche Sauggutmenge und eine auf dem Arbeitselement 10 befindliche Sauggutmenge (Schmutzaufnahme) betrifft. Somit enthält die Datenbank 5 bezogen auf jedes der Bodenbearbeitungsgeräte 1, 2 und dessen aktuelle Einstellungsparameter 12 die von den Detektionseinrichtungen 3, 4 während des Arbeitsbetriebs aufgenommenen Detektionsparameter 11. Die in der Datenbank 5 befindlichen Daten stehen allen Bodenbearbeitungsgeräten 1, 2 des Systems zur Verfügung. Die der Datenbank 5 zugeordnete Recheneinrichtung 9 greift auf die in der Datenbank 5 gespeicherten Daten zu und verarbeitet diese weiter, um künftige Einstellungsparameter 12 für eines oder mehrere Bodenbearbeitungsgeräte 1, 2 zu berechnen.

Für den Betrieb des zweiten Bodenbearbeitungsgerätes 2 (Gerät 2) kann bspw. auf die in der Datenbank 5 befindlichen Detektionsparameter 11 und Einstellungsparameter 12 des ersten Bodenbearbeitungsgerätes 1 (Gerät 1) zugegriffen werden, um in Abhängigkeit davon Einstellungsparameter 12 für den anstehenden Arbeitsbetrieb des zweiten Bodenbearbeitungsgerätes 2 abzuleiten. Falls das Bodenbearbeitungsgerät 2 hier bspw. auf einem Teppichboden (Bodenart "1") reinigen soll, greift die Recheneinrichtung 9 auf all diejenigen Daten innerhalb der Datenbank 5 zu, welche Reinigungen eines Teppichbodens betreffen. Hier kann der Datenbank 5 bspw. aus dem Datensatz des ersten Bodenbearbeitungsgerätes 1 entnommen werden, dass die Bodenart Teppichboden mit einer Bürstenstellung "1", welche einer auf die zu reinigende Fläche aufgesetzten Stellung entspricht, bearbeitet wurde. Des Weiteren hatte die Fortbewegungsgeschwindigkeit des Bodenbearbeitungsgerätes 1 einen Betrag von "1" und die Motor-Gebläse-Einheit hatte einen Nenn-Saugstrom von "1". Bei diesen Einstellungsparametern 12 wurde für das erste Bodenbearbeitungsgerät 1 der Detektionsparameter 11 "Schmutzaufnahme" detektiert und als "hoch" bewertet. Die Recheneinrichtung 9 stellt daraufhin fest, dass die Einstellungsparameter 12 des ersten Bodenbearbeitungsgerätes 1 auf der Bodenart Teppichboden zu einer optimalen Schmutzaufnahme führten, woraufhin eine Steuereinrichtung auch das zweite Bodenbearbeitungsgerät 2 mit diesen Einstellungsparametern 12 steuern kann, um eine "hohe" Schmutzaufnahme zu erreichen. Die Steuereinrichtung kann entweder eine in das Bodenbearbeitungsgerät 2 integrierte Steuereinrichtung sein oder eine in der externen Speichereinrichtung 8 befindliche Steuereinrichtung, welche das Bodenbearbeitungsgerät 2 von außen steuert.

Des Weiteren kann bspw. ein drittes Bodenbearbeitungsgerät (Gerät 3), welches in der Figur 1 nicht dargestellt ist, innerhalb des Systems vernetzt werden. Eine Detektionseinrichtung 4 des Gerätes kann bspw. feststellen, dass auf der Bodenart Teppichboden nur eine geringe Schmutzaufnahme erzielt wurde. Um den Detektionsparameter 11 "Schmutzaufnahme" davon ausgehend so zu ändern, dass ebenfalls ein optimaler Wert erreicht wird, kann die Recheneinrichtung 9 aus der Datenbank 5 die Einstellungsparameter 12 der anderen Bodenbearbeitungsgeräte 1, 2 auswerten und diejenigen Einstellungsparameter 12 herausfiltern, welche zu einer hohen Schmutzaufnahme geführt haben. Diese Einstellungsparameter 12 können sodann von der Recheneinrichtung 9 an die Steuereinrichtung übermittelt werden, welche daraufhin auch die Einstellungsparameter 12 des dritten Gerätes so ändert, dass auch die Schmutzaufnahme des dritten Gerätes "hoch" wird. Hier werden bspw. die Stellung des Arbeitselementes 10 und die Fortbewegungsgeschwindigkeit des Gerätes geändert, nämlich bspw. die Stellung des Arbeitselementes 10 von einer von der Fläche abgehobenen Stellung in eine auf die Fläche aufgesetzte Stellung geändert und die Geschwindigkeit des Fahrzeugs herabgesetzt, sodass das Gerät länger über einen bestimmten Teilbereich der zu reinigenden Fläche verbleibt. Dadurch kann die Schmutzaufnahme insgesamt erhöht werden.

Obwohl dies in dem Ausführungsbeispiel nicht beschrieben wurde, können auch andere Detektionseinrichtungen 3, 4 an den Bodenbearbeitungsgeräten 1, 2 angeordnet sein, um weitere oder andere Detektionsparameter 11 zu detektieren. Zu diesen Detektionsparametern 11 können bspw. ein Material, eine Struktur und/oder ein Verschmutzungsgrad der zu reinigenden Fläche zählen, oder auch eine freie oder blockierte Beweglichkeit des Bodenbearbeitungsgerätes 1, 2 oder eines Arbeitselementes 10 des Bodenbearbeitungsgerätes 1, 2. Weitere Detektionsparameter 11 können bspw. eine aktuelle Leistungsaufnahme eines Elektromotors des Bodenbearbeitungsgerätes 1, 2 sein, bspw. ein für einen Antrieb des Bodenbearbeitungsgerätes 1, 2 oder eines Arbeitselementes 10 verwendeter Elektromotor.

Einstellungsparameter 12 der Bodenbearbeitungsgeräte 1, 2 können neben den zuvor Beschriebenen auch weitere Parameter des Arbeitselementes 10 oder des Arbeitsbetriebs des Bodenbearbeitungsgerätes 1, 2 sein, bspw. eine Drehzahl und/oder Geschwindigkeit eines Arbeitselementes 10, eine Fortbewegungsrichtung und/oder Arbeitsrichtung des Bodenbearbeitungsgerätes 1, 2, eine Anwesenheit und/oder Einstellung eines Vorsatzgerätes des Bodenbearbeitungsgerätes 1, 2 und dergleichen. Einige der Einstellungsparameter 12 können gleichzeitig auch Detektionsparameter 11 sein. Bspw. kann ein Saugstrom der Motor-Gebläse-Einheit einerseits einen Nennwert als Einstellungsparameter 12 definieren und andererseits ein tatsächlicher Saugstrom als Detektionsparameter 11 gemessen werden, im Sinne eines Soll-Ist-Vergleiches. Gleiches gilt ebenfalls bspw. für eine Fortbewegungsgeschwindigkeit des Bodenbearbeitungsgerätes 1, 2 oder eine Leistungsaufnahme eines Elektromotors des Bodenbearbeitungsgerätes 1, 2.

### Liste der Bezugszeichen

- 1: Bodenbearbeitungsgerät
- 2: Bodenbearbeitungsgerät
- 3: Detektionseinrichtung
- 4: Detektionseinrichtung
- 5: Datenbank
- 6: Abstandsmesseinrichtung
- 7: Speicher
- 8: Speichereinrichtung
- 9: Recheneinrichtung
- 10: Arbeitselement
- 11: Detektionsparameter
- 12: Einstellungsparameter

## Patentansprüche

1. System mit mindestens zwei Bodenbearbeitungsgeräten (1, 2) zur automatisch gesteuerten Bearbeitung einer Fläche eines Innenraumes anhand von definierten Einstellungsparametern (12) des jeweiligen Bodenbearbeitungsgerätes (1, 2), wobei jedes der Bodenbearbeitungsgeräte (1, 2) mindestens ein Arbeitselement (10), nämlich ein von einem Elektromotor angetriebenes Bodenbearbeitungselement, und mindestens eine Detektionseinrichtung (3,4) zur Detektion mindestens eines Detektionsparameters (11) des Bodenbearbeitungsgerätes (1, 2) und/oder einer Umgebung des Bodenbearbeitungsgerätes (1, 2) aufweist, wobei das System eine den Bodenbearbeitungsgeräten (1, 2) gemeinsam zugeordnete Datenbank (5) aufweist, in welcher den Einstellungsparametern (12) des jeweiligen Bodenbearbeitungsgerätes (1, 2) zugehörig Detektionsparameter (11) von zumindest zwei Bodenbearbeitungsgeräten (1, 2) gespeichert sind, **dadurch gekennzeichnet, dass** der Detektionsparameter (11) eine Eigenschaft einer Umgebung, nämlich eine Art der zu bearbeitenden Fläche als Hartboden oder Teppichboden und/ oder ein Material der zu bearbeitenden Fläche und/ oder eine Struktur der zu bearbeitenden Fläche, nämlich eines Hartbodens oder Teppichbodens, und/oder eine Leistungsaufnahme eines Elektromotors des Bodenbearbeitungsgerätes (1, 2) ist, und wobei der Einstellungsparameter des Bodenbearbeitungsgerätes (1, 2) ein Saugstrom einer Motor-Gebläse-Einheit und/ oder eine Anwesenheit eines Vorsatzgerätes des Bodenbearbeitungsgerätes (1, 2) und/oder eine Einstellung eines Saugmundes eines Vorsatzgerätes und/oder eines Dichtelementes eines Vorsatzgerätes ist.

2. System nach Anspruch 1, **dadurch gekennzeichnet, dass** die Datenbank (5) in einem lokalen Speicher (7) eines Bodenbearbeitungsgerätes (1, 2) und/oder in einer separat zu dem Bodenbearbeitungsgerät (1, 2) ausgebildeten externen Speichereinrichtung (8) gespeichert ist.

3. System nach einem der vorhergehenden Ansprüche, **gekennzeichnet durch** eine Recheneinrichtung (9) des Bodenbearbeitungsgerätes (1, 2) und/ oder eine der Datenbank (5) zugeordnete Recheneinrichtung (9).

4. System nach Anspruch 3 , **dadurch gekennzeichnet, dass** die Recheneinrichtung (9) eingerichtet ist, von der Detektionseinrichtung (3, 4) aufgenommene Detektionsparameter (11) zu verarbeiten und an die Datenbank (5) zu übermitteln und/oder auf in der Datenbank (5) gespeicherte Detektionsparameter (11) zuzugreifen und in Abhängigkeit von mindestens einem Detektionsparameter (11) einen Einstellungsparameter (12) eines Bodenbearbeitungsgerätes (1, 2) zu berechnen.

5. System nach Anspruch 4, **dadurch gekennzeichnet, dass** der Detektionsparameter (11) ein Detektionsparameter (11) eines ersten Bodenbearbeitungsgerätes (1, 2) ist und dass der Einstellungsparameter (12) ein Einstellungsparameter (12) eines zweiten Bodenbearbeitungsgerätes (2, 1) ist.

6. System nach einem der vorhergehenden Ansprüche, **gekennzeichnet durch** eine auf die Datenbank (5) zugreifende Steuereinrichtung, welche eingerichtet ist, das Bodenbearbeitungsgerät (1, 2) unter Verwendung eines Einstellungsparameters (12) zu steuern.

7. Verfahren zum Betrieb eines Systems mit mindestens zwei Bodenbearbeitungsgeräten (1, 2) zur automatisch gesteuerten Bearbeitung einer Fläche eines Innenraumes anhand von definierten Einstellungsparametern (12) des jeweiligen Bodenbearbeitungsgerätes (1, 2), wobei jedes der Bodenbearbeitungsgeräte (1, 2) mindestens ein Arbeitselement (10), nämlich ein von einem Elektromotor angetriebenes Bodenbearbeitungselement, und mindestens eine Detektionseinrichtung (3,4) aufweist, die mindestens einen Detektionsparameter (11) des Bodenbearbeitungsgerätes (1, 2) und/ oder einer Umgebung des Bodenbearbeitungsgerätes (1, 2) detektiert, wobei Detektionsparameter (11) von zumindest zwei Bodenbearbeitungsgeräten (1, 2) den Einstellungsparametern (12) des jeweiligen Bodenbearbeitungsgerätes (1, 2) zugehörig in einer den Bodenbearbeitungsgeräten (1, 2) gemeinsam zugeordneten Datenbank (5) gespeichert werden, **dadurch gekennzeichnet, dass** der Detektionsparameter (11) eine Eigenschaft einer Umgebung, nämlich eine Art der zu bearbeitenden Fläche als Hartboden oder Teppichboden und/ oder ein Material der zu bearbeitenden Fläche und/oder eine Struktur der zu bearbeitenden Fläche, nämlich eines Hartbodens oder Teppichbodens, und/ oder eine Leistungsaufnahme eines Elektromotors des Bodenbearbeitungsgerätes (1, 2) ist, und wobei der Einstellungsparameter des Bodenbearbeitungsgerätes (1, 2) ein Saugstrom einer Motor-Gebläse-Einheit und/oder eine Anwesenheit eines Vorsatzgerätes des Bodenbearbeitungsgerätes (1, 2) und/ oder eine Einstellung eines Saugmundes eines Vorsatzgerätes und/oder eines Dichtelementes eines Vorsatzgerätes ist.

8. Verfahren nach Anspruch 7, **dadurch gekennzeichnet, dass** ein Einstellungsparameter (12) eines Bodenbearbeitungsgerätes (1, 2) in Abhängigkeit von zumindest einem in der Datenbank (5) gespeicherten Detektionsparameter (11) berechnet wird.

## Claims

1. System comprising at least two floor treatment apparatuses (1, 2) for treating a surface of an interior space in an automatically controlled manner on the basis of defined adjustment parameters (12) of the relevant floor treatment apparatus (1, 2), each of the floor treatment apparatuses (1, 2) having at least one working element (10), specifically a floor treatment element driven by an electric motor, and at least one detection device (3, 4) for detecting at least one detection parameter (11) of the floor treatment apparatus (1, 2) and/or a surroundings of the floor treatment apparatus (1, 2), the system having a database (5) which is jointly assigned to the floor treatment apparatuses (1, 2) and in which detection parameters (11) of at least two floor treatment apparatuses (1, 2) are stored in association with the adjustment parameters (12) of the relevant floor treatment apparatus (1, 2), **characterised in that** the detection parameter (11) is a property of a surroundings, specifically a type of the surface to be treated as hard floor or carpet, and/or a material of the surface to be treated and/or a structure of the surface to be treated, specifically a hard floor or carpet, and/or a power consumption of an electric motor of the floor treatment apparatus (1, 2), and the adjustment parameter of the floor treatment apparatus (1, 2) being a suction flow of a motor-blower unit and/or a presence of an attachment of the floor treatment apparatus (1, 2) and/or an adjustment of a suction mouth of an attachment and/or of a sealing element of an attachment.

2. System according to claim 1, **characterised in that** the database (5) is stored in a local memory (7) of a floor treatment apparatus (1, 2) and/or in an external storage device (8) formed separately from the floor treatment apparatus (1, 2).

3. System according to either of the preceding claims, **characterised by** a computing device (9) of the floor treatment apparatus (1, 2) and/or a computing device (9) assigned to the database (5).

4. System according to claim 3, **characterised in that** the computing device (9) is designed to process detection parameters (11) recorded by the detection device (3, 4) and to transmit them to the database (5) and/or to access detection parameters (11) stored in the database (5) and to calculate an adjustment parameter (12) of a floor treatment apparatus (1, 2) as a function of at least one detection parameter (11).

5. System according to claim 4, **characterised in that** the detection parameter (11) is a detection parameter (11) of a first floor treatment apparatus (1, 2) and **in that** the adjustment parameter (12) is an adjustment parameter (12) of a second floor treatment apparatus (2, 1).

6. System according to any of the preceding claims, **characterised by** a control device which accesses the database (5) and is designed to control the floor treatment apparatus (1, 2) using an adjustment parameter (12).

7. Method for operating a system comprising at least two floor treatment apparatuses (1, 2) for treating a surface of an interior space in an automatically controlled manner on the basis of defined adjustment parameters (12) of the relevant floor treatment apparatus (1, 2), each of the floor treatment apparatuses (1, 2) having at least one working element (10), specifically a floor treatment element driven by an electric motor, and at least one detection device (3, 4) which detects at least one detection parameter (11) of the floor treatment apparatus (1, 2) and/or a surroundings of the floor treatment apparatus (1, 2), detection parameters (11) of at least two floor treatment apparatuses (1, 2) being stored in a database (5) which is jointly assigned to the floor treatment apparatuses (1, 2), in association with the adjustment parameters (12) of the relevant floor treatment apparatus (1, 2), **characterised in that** the detection parameter (11) is a property of a surroundings, specifically a type of the surface to be treated as hard floor or carpet, and/or a material of the surface to be treated and/or a structure of the surface to be treated, specifically a hard floor or carpet, and/or a power consumption of an electric motor of the floor treatment apparatus (1, 2), and the adjustment parameter of the floor treatment apparatus (1, 2) being a suction flow of a motor-blower unit and/or a presence of an attachment of the floor treatment apparatus (1, 2) and/or an adjustment of a suction mouth of an attachment and/or of a sealing element of an attachment.

8. Method according to claim 7, **characterised in that** an adjustment parameter (12) of a floor treatment apparatus (1, 2) is calculated as a function of at least one detection parameter (11) stored in the database (5).

## Revendications

1. Système comportant au moins deux appareils de traitement du sol (1, 2) pour le traitement commandé automatiquement d'une surface d'un espace intérieur sur la base de paramètres de réglage définis (12) de l'appareil de traitement du sol respectif (1, 2), dans lequel chacun des appareils de traitement du sol (1, 2) présente au moins un élément de traitement (10), à savoir un élément de traitement du sol entraîné par un moteur électrique, et au moins un dispositif de détection (3, 4) pour la détection d'au moins un paramètre de détection (11) de l'appareil de traitement du sol (1, 2) et/ou d'un environnement de l'appareil de traitement du sol (1, 2), dans lequel le système présente une base de données (5) associée en commun aux appareils de traitement du sol (1, 2), dans laquelle sont stockés des paramètres de détection (11) d'au moins deux appareils de traitement du sol (1, 2) en étant associés aux paramètres de réglage (12) de l'appareil de traitement du sol respectif (1, 2), **caractérisé en ce que** le paramètre de détection (11) est une propriété d'un environnement, à savoir un type de la surface à traiter comme sol dur ou moquette et/ou un matériau de la surface à traiter et/ou une structure de la surface à traiter, à savoir un sol dur ou une moquette, et/ou une puissance absorbée d'un moteur électrique de l'appareil de traitement du sol (1, 2), et dans lequel le paramètre de réglage de l'appareil de traitement du sol (1, 2) est un flux d'aspiration d'une unité moteur-souffleur et/ou une présence d'un accessoire de l'appareil de traitement du sol (1, 2) et/ou un réglage d'une bouche d'aspiration d'un accessoire et/ou un élément d'étanchéité d'un accessoire.

2. Système selon la revendication 1, **caractérisé en ce que** la base de données (5) est stockée dans une mémoire locale (7) d'un appareil de traitement du sol (1, 2) et/ou dans un dispositif de mémoire externe (8) formé séparément de l'appareil de traitement du sol (1, 2).

3. Système selon l'une des revendications précédentes, **caractérisé par** un dispositif de calcul (9) de l'appareil de traitement du sol (1, 2) et/ou un dispositif de calcul (9) associé à la base de données (5).

4. Système selon la revendication 3, **caractérisé en ce que** le dispositif de calcul (9) est configuré pour traiter des paramètres de détection (11) enregistrés par le dispositif de détection (3, 4) et pour les transmettre à la base de données (5) et/ou pour accéder à des paramètres de détection (11) stockés dans la base de données (5) et pour calculer un paramètre de réglage (12) d'un appareil de traitement du sol (1, 2) en fonction d'au moins un paramètre de détection (11).

5. Système selon la revendication 4, **caractérisé en ce que** le paramètre de détection (11) est un paramètre de détection (11) d'un premier appareil de traitement du sol (1, 2) et **en ce que** le paramètre de réglage (12) est un paramètre de réglage (12) d'un deuxième appareil de traitement du sol (2, 1) .

6. Système selon l'une des revendications précédentes, **caractérisé par** un dispositif de commande accédant à la base de données (5), qui est configuré pour commander l'appareil de traitement du sol (1, 2) en utilisant un paramètre de réglage (12).

7. Procédé pour faire fonctionner un système comprenant au moins deux appareils de traitement du sol (1, 2) pour le traitement commandé automatiquement d'une surface d'un espace intérieur sur la base de paramètres de réglage (12) définis de l'appareil de traitement du sol respectif (1, 2), dans lequel chacun des appareils de traitement du sol (1, 2) présente au moins un élément de traitement (10), à savoir un élément de traitement du sol entraîné par un moteur électrique, et au moins un dispositif de détection (3, 4) qui détecte au moins un paramètre de détection (11) de l'appareil de traitement du sol (1, 2) et/ou d'un environnement de l'appareil de traitement du sol (1, 2), dans lequel les paramètres de détection (11) d'au moins deux appareils de traitement du sol (1, 2) sont enregistrés en étant associés aux paramètres de réglage (12) de l'appareil de traitement du sol respectif (1, 2), dans une base de données (5) qui est associée en commun aux appareils de traitement du sol (1, 2), **caractérisé en ce que** le paramètre de détection (11) est une propriété d'un environnement, à savoir un type de la surface à traiter comme sol dur ou moquette et/ou un matériau de la surface à traiter et/ou une structure de la surface à traiter, à savoir un sol dur ou une moquette, et/ou une puissance absorbée d'un moteur électrique de l'appareil de traitement de sol (1, 2), et dans lequel le paramètre de réglage de l'appareil de traitement du sol (1, 2) est un flux d'aspiration d'une unité moteur-souffleur et/ou une présence d'un accessoire de l'appareil de traitement du sol (1, 2) et/ou un réglage d'une bouche d'aspiration d'un accessoire et/ou un élément d'étanchéité d'un accessoire.

8. Procédé selon la revendication 7, **caractérisé en ce qu'**un paramètre de réglage (12) d'un appareil de traitement du sol (1, 2) est calculé en fonction d'au moins un paramètre de détection (11) stocké dans la base de données (5).
